# EUROPÄISCHE PATENTSCHRIFT

(11) **EP 2 002 284 B1**
(45) Veröffentlichungstag und Bekanntmachung des Hinweises auf die Patenterteilung: **29.08.2012**
(21) Anmeldenummer: 07726756.5
(22) Anmeldetag: 09.03.2007
(51) Int. Cl.: G01S 17/08, G01S 15/08

(54) **VORRICHTUNG ZUR DISTANZMESSUNG, SOWIE VERFAHREN ZUM BETRIEB EINER SOLCHEN VORRICHTUNG**
DISTANCE MEASURING DEVICE AND METHOD FOR OPERATING SAID DEVICE
DISPOSITIF DE TÉLÉMÉTRIE ET PROCÉDÉ D'EXPLOITATION APPROPRIÉ

(30) Priorität: 24.03.2006 DE 102006013707
(43) Veröffentlichungstag der Anmeldung: 17.12.2008
(73) Patentinhaber: Robert Bosch GmbH, 70442 Stuttgart (DE)
(72) Erfinder: TIEDE, Steffen, 71083 Herrenberg (DE); LUKAS, Heiner, 70197 Stuttgart (DE); ADAMCZAK, Wolfgang, 70597 Stuttgart (DE)
(86) Internationale Anmeldenummer: PCT/EP2007/052234
(87) Internationale Veröffentlichungsnummer: WO 2007/110311

(56) Entgegenhaltungen:
- EP-A- 1 475 608
- EP-A- 1 566 658
- DE-A1- 3 047 785
- DE-A1- 10 232 878
- DE-A1- 19 811 550
- GB-A- 2 150 888
- US-A- 4 464 738
- US-A- 5 287 627
- US-A1- 2004 051 860
- US-A1- 2005 111 301

## Beschreibung

Die Erfindung betrifft eine Vorrichtung zur Distanzmessung, insbesondere zur berühungslosen Distanzmessung, welche mittels eines ausgesandten Messsignals die Bestimmung eines Abstands zwischen einem Zielobjekt und zumindest einem Referenzpunkt der Vorrichtung ermöglicht. Des Weiteren betrifft die Erfindung ein Verfahren zum Betrieb einer derartigen Vorrichtung, insbesondere ein Verfahren zum Betrieb eines digitalen Meterstabs.

### Stand der Technik

Bei der Bestimmung von Abständen bzw. Distanzen unterscheidet man zwischen einer direkten Messung durch unmittelbaren Vergleich einer Distanz mit einem Messmittel, wie beispielsweise einem Lineal, einem Maßband oder auch einem Gliedermaßstab auf der einen Seite und einer indirekten Vermessung mittels berührungsloser, beispielsweise elektrooptischer Entfernungsmesser. Elektrooptische Entfernungsmesser ermöglichen die Ermittlung von Entfernungen bzw. Distanzen mittels Laufzeit- oder Phasenmessungen eines Messsignals.

Die sich im Markt befindlichen indirekten Entfernungsmesser sind dabei fast ausschließlich als Messgeräte zur Bestimmung eines Abstandswerts und nicht als Hilfsgeräte für messbegleitende Tätigkeiten, wie beispielsweise dem Abtragen und Markieren von Punkten oder Linien konzipiert.

Aus der EP 15 666 58 A1 ist eine handgehaltene Vorrichtung zum Messen von Distanzen bekannt, welche über in einem Gehäuse angeordnete Optiken Sendestrahlen gegen den Oberflächenbereich eines zu vermessenden Objektes aussendet und die daran reflektierten Strahlen wieder empfängt. Diese Vorrichtung weist zudem ein mit dem Gehäuse verbundenes Bauteil auf, das zum Messen kurzer Distanzen in Ausbreitungsrichtung der Sendestrahlen über das Gehäuse hinaus erstreckbar ist. Eine Ausführungsform dieses Geräts sieht ein als Abstandhalter dienendes Bauteil vor, das sich in einer fest vorbestimmten Länge über das Gehäuse hinaus erstreckt. Die fest vorbestimmte Länge dieses Abstandshalters ist zumindest so groß, wie der kritische Abstand vor dem Gehäuses des Messgerats ist, in dem keine optischen Messungen auf Oberflächenbereiche möglich sind.

Die US 5, 287, 627 offenbart eine zweiteilige Messeinrichtung mit einem Laserpointer, der in einem ersten Gehäuse angeordnet ist und ein sichtbares, nivelliertes Signal aussendet. Die Vorrichtung weist in einem zweiten Gehäuse ein klassisches Meßband auf, welches es ermöglicht. Abstände der Vorrichtung zu einem Zielobjekt, beispielsweise in Richtung des Lasersignals zu vermessen- Die Gehäuse der Vorrichtung sind gegeneinander verdrehbar, so dass beispielsweise auch. Abstände senkrecht zu der vom Laserpointer angezeigten Richtung mittels des Maßbandes vermessen werden können. In einer speziellen Ausführungsform beschreibt die US 5, 287, 627 ein System aus zwei getrennten Geräten, bei dem der im ersten Gerät angeordnete Laser eine im zweiten Gerät angeordnete "Uhr" berührungslos triggert. Mittels der Laufzeit eines vom ersten Gerät ausgesandten und vom zweiten Gerät empfangenen Ultraschallsignals wird dann der Abstand zwischen den beiden Geräten der Vorrichtung der US 5, 287, 627 bestimmt. In einer dazu alternativen Ausführungsform, wird das Ultraschallsignal, vom zweiten Gerät ausgesandt, im ersten Gerät detektiert und die "Ankunftszeit" des Ultraschallsignals über das Lasersignal des ersten Gerätes an das zweite Gerät übermittelt. In beiden Ausführungsformen der Vorrichtung wird der Abstand zwischen dem ersten Gehäuse und dem zweiten Gehäuse der Vorrichtung durch die unldirekdonale Laufzeit des Ultraschallsignals bestimmt. Durch das Anlegen des zweiten Gehäuses an ein Zielobjekt kann mit der Vorrichtung der US 5, 287, 627 indirekt auch der Abstand des ersten Gehäuses der Vorrichtung zu dem Zielobjekt bestimmt werden.

Aus der GB 2 150 888 Ist ein Lineal mit einer variablen Skala bekannt. Die Skala dieses Lineals wird über eine optische Anzeige ausgegeben und kann entsprechend der Vorgaben eines Nutzers verschiedene Größenmaßstäbe wiedergeben.

### Offenbarung der Erfindung

Dio orlindungsgemäße Vorrichtung zur Distanzmessung, welche mittels eines ausgesandten Messsignals, insbesondere mittels eines modulierten Messsignals, die berührungsloso Bestimmung eines Abstands zwischen einem Zielobjekt und zumindest einem Referenzpunkt der Vorrichtung ermöglicht, besitzt ein Gehäuses, mit einem dem zu vermessenden Objekt zugewandten ersten Ende und einem, von dem zu vermessenden Objekt abgewandten, zweiten Ende. Darüber hinaus weist die Vorrichtung eine Ausgabeeinheit zur Wiedergabe von Messergebnissen auf. In vorteilhafter Weise ist zumindest ein Teilabschnitt der Strecke zwischen dem zu vermessenden Objekt und dem abgewandten Ende des Gehäuses mittels einer Längenmessskala über die Ausgabeeinheit der Vorrichtung darstellbar. Das heißt, dass zumindest einem Teilabschnitt der Strecke zwischen dem zu vermessenden Objekt und dem abgewandten Ende des Gehäuses der Vorrichtung über die Ausgabeeinheit eine Längemmessskala und somit Abstandswerte, insbesondere eine Mehrzahl vnn Abstandswerten, zugeordnet werden können.

Die efindungsgemäße Vorrichtung ermöglicht es somit; nicht nür einen einzelnen quantitativen Abstandswort zu ermitteln und zur Anzeige zu bringen, wie dies beispielsweise bei Geräten des Stands der Technik möglich ist, sondern kann eine ganze Längenmessskala, darstellen, die einen endlichen Bereich der vermessenen Streeke, bzw. der Strecke zwischen dem zu vermessenden Objekt und dem vom Objekt abgewandtem Ende des Messgeräts wiedergibt.

Auf diese Weise bildet die erfindungsgemäße Vorrichtung einen Meterstab, insbesondere einen digitalen Meterstab, mit einer Messskala, insbesondere einer Längennlessskala, welche über eine Ausgabeeinheit der Vorrichtung, insbesondere in graphischer Weise dargestellt werden kann, und die Entfernungswerte über einen ganzen Teilabschnitt der vermessenen Strecke dazustellen vermag.

Einen Nutzer der erfindungsgemäßen Vorrichtung wird somit in vorteilhafter Weise nicht nur ein singulärer Abstandswert der Vorrichtung zu einem zu vermessenden Objekt übermittelt, sondern er besitzt, wie bei einer Vorrichtung zur direkten Entfernungsmessung direkt über einen Bereich endlicher Länge eine Messskala, die den jeweiligen Abstand zu dem zu vermessenden Objekt wiedergibt.

Beim Betrieb einer derartigen Vorrichtung, die in ihrer Funktion einem digitalen Meterstab entspricht, wird der Nullpunkt der Messskala des Meterstabs, der sich außerhalb des von der Ausgabeeinheit der Vorrichtung dargestellten Messbereichs liegt, über eine berührungslose Abstandsmessung, insbesondere beispielsweise über eine elektrooptische Abstandmessung bestimmt. Ein derartiges Verfahren ermöglicht es vorteilhaft mit einem Meterstab von nur endlicher Länge, die beispielsweise in einer typischen Größenordnung von 0,3 bis 1 Meter liegen kann, auch deutlich größere Strecken von mehreren Metern zu vermessen und gleichzeitig einen ganzen Bereich von Entfernungen und relativen Abständen angezeigt zu bekommen, wie dies beispielsweise bei einem klassischen Gliedermaßstab für einen begrenzten Messbereich gegeben ist.

Durch die in den abhängigen Ansprüchen aufgeführten Merkmale sind vorteilhafte Weiterbildungen der erfindungsgemäßen Vorrichtung bzw. des erfindungsgemäßen Verfahrens zum Betrieb einer solchen Vorrichtung möglich.

Insbesondere ist die mittels der Ausgabeeinheit reproduzierte Messskala derart variabel darstellbar, dass sich diese mit zu- und/oder abnehmender Messentfernung der Vorrichtung zu einem Zielobjekt entsprechend der gemessenen Entfernung zwischen der Vorrichtung und dem zu vermessenden Objekt ändert.

In vorteilhafter Weise weist die Messskala der erfmdungsgemäßen Vorrichtung Skalenteile und/oder Zahlenwerte auf. Dabei ist es insbesondere vorteilhaft, wenn die Messskala über Zahlenwerte verfügt, deren Betrag dem jeweiligen Abstand des zugehörigen Skalenteils zum Messobjekt entspricht, so dass die Messskala eine Längenmessskala bildet. Wird der Abstand der Vorrichtung zu einem Messobjekt variiert, so werden in entsprechender Weise auch die Skalenteile bzw. die den Skalenteilen zugeordneten Zahlenwerte variiert und in entsprechend aktualisierter Form über die Ausgabeeinheit der Vorrichtung einem Anwender zur Kenntnis gebracht.

Diese Skalenanpassung kann beispielsweise automatisch erfolgen, sobald das Gerät in einem Dauermessmodus arbeitet und dabei ständig die Entfernung misst.

Dies wird beispielsweise dadurch ermöglicht, dass eine in der Vorrichtung integrierte Recheneinheit den jeweiligen Abstand eines Referenzpunkts der Vorrichtung zu dem zu vermessenden Objekt bestimmt und ausgehend von diesem Abstand über zumindest einen Teilbereich der Längsausdehnung des Messgeräts eine Längenmessskala generiert, welche über die Ausgabeeinheit des Messgeräts dargestellt werden kann.

In vorteilhafter Weise verfügt das Gehäuse der erfindungsgemäßen Vorrichtung über eine zur Messsignalrichtung der berührungslosen Distanzmessung im Wesentlichen parallele Anlagekante. Diese Anlagekante bildet in vorteilhafter Weise ein Lineal zum Zeichnen von Linien und Strecken, insbesondere zum Übertragen gerade Linien von der Anlagekante auf eine Oberfläche. Das Zeichnen der Linie erfolgt, indem die erfindungsgemäße Vorrichtung bzw. die ein Lineal bildenden Anlagekante der Vorrichtung an bestimmte Punkte der Zeichenfläche angelegt wird und dann beispielsweise mit einem Stift die Anlagekante der Vorrichtung abgefahren wird. Dadurch wird die Form der Kante als Linie auf den Untergrund übertragen.

In vorteilhafter Weise ist die Ausgabeeinheit zur Darstellung der Messskala bei der erfindungsgemäßen Vorrichtung im Wesentlichen, das heißt, im Rahmen fertigungsbedingter Toleranzen, parallel zu einer Anlagekante des Gehäuses angeordnet. Dies ermöglicht die direkte Übertragung von Messpunkten, welche über die Messskala abgelesen werden können, auf einen entsprechenden Untergrund, wie beispielsweise eine Wand, eine Decke oder den Boden eines Gehäuses oder Gebäudes. Aufgrund der Tatsache, dass mit der erfindungsgemäßen Vorrichtung nicht nur lediglich ein Messwert angezeigt wird, sondern ein gesamter Messbereich mit entsprechenden Zwischenskalenwerten graphisch wiedergegeben wird, können so mit einer einzigen Geräteposition mehrere Maße bzw. auch Strecken und insbesondere auch relative Abstände abgetragen werden, ohne die Lage der Distanzmessvorrichtung ändern zu müssen. Insbesondere ermöglicht eine zur Messsignalrichtung parallele Anlagekante das Übertragen auch von längeren und insbesondere geraden Linien oder Strecken auf den jeweiligen Untergrund. Das Gehäuse der Vorrichtung bildet somit in vorteilhafter Weise durch seine parallelen Seiten ein Lineal. Da die erfindungsgemäße Vorrichtung nicht nur lediglich einen einzelnen Abstandswert ermittelt, sondern einen ganzen Bereich von Entfernungswerten darstellt, der beispielsweise in der Größenordnung von 30 cm liegen kann, ist insbesondere eine exakte Positionierung des Messgeräts in Richtung des Messsignals nicht erforderlich.

Anders als bei Geräten des Stands der Technik, bei denen beispielsweise im Dauermessbetrieb des Entfernungsmessers das Gerät mit sehr ruhiger Hand und viel Zeitaufwand millimetergenau in eine gewünschte Abstandsposition gebracht werden muss, um ein Maß abzutragen bzw. eine Markierung zu setzen, ermöglicht das erfindungsgemäße Messgerät eine zeitsparende Handhabung, da der relative Abstand in Richtung der Messsignalrichtung der Vorrichtung über einen relativ großen Messbereich mittels der dargestellten Messskala exakt feststellbar ist. Es muss lediglich sichergestellt sein, dass der Endpunkt der vermessenen Strecke, in den mit der Anzeige darstellbaren Bereich fällt,

Im Gegensatz zu klassischen Linealen, wie sie für die direkte Messung von Distanzen seit langer Zeit bekannt sind, ermöglicht die erfindungsgemäße Vorrichtung nicht nur einen auf die Länge des Lineals beschränkten Messbereich. Bei der erfindungsgemäßen Vorrichtung ist der Messbereich letztendlich begrenzt durch den Messbereich der berührungslosen Abstandsmessung. Dieser mit der berührungslosen Abstandsmessung zugängliche Messbereich kann zwischen einigen wenigen Zentimetern und mehr als 100 Metern liegen.

In vorteilhafter Weise ist die Messskala, welche über die Ausgabeeinheit des Messgeräts darstellbar ist, in ihrer Orientierung relativ zum Gehäuse umschaltbar. So kann beispielsweise die Anzeige von Zahlenwerten je nach Orientierung der erfindungsgemäßen Vorrichtung beispielsweise um 180° gedreht dargestellt werden. Dies sorgt für eine deutlich verbesserte Erkennbarkeit der Messskala des erfindungsgemäßen Messgeräts und trägt zu dessen Anwenderfreundlichkeit bei. Um dies zu realisieren, kann ein Lage- oder Neigungssensor in der erfindungsgemäßen Vorrichtung integriert sein.

In vorteilhafter Weise verfügt das Gehäuse der erfindungsgemäßen Vorrichtung über eine zusätzliche Skala, beispielsweise eine fixe Strichskala, welche insbesondere im Bereich der Anlagekante des Gehäuses ausgebildet ist. Eine solche zweite, fix am Gehäuse angebrachte Skala ermöglicht ein einfaches Übertragen und Abtragen von Messpunkten bzw. Strecken auf einen Arbeitsuntergrund. Die variable, über die Ausgabeeinheit darstellbare elektronisches Messskala korrespondiert dabei in vorteilhafter Weise mit der fixen mechanischen Skala am Gehäuse der Vorrichtung.

In einer vorteilhaften Ausführungsform der erfindungsgemäßen Vorrichtung ist das verwendete Messsignal zur berührungslosen Distanzmessung ein elektromagnetisches Messsignal, beispielsweise ein Lichtsignal oder aber auch Radarsignal. In besonders vorteilhafter Weise eignet sich hier ein moduliertes Lasersignal, welches die berührungslose Distanzmessung beispielsweise über eine Laufzeitmessung oder aber auch über eine Phasenmessung des Signals in bekannter Weise ermöglicht.

In alternativen Ausführungsformen der erfindungsgemäßen Vorrichtung kann aber auch ein akustisches Signal, beispielsweise ein Ultraschallsignal zur berührungslosen Abstandsmessung verwendet werden.

Die erfindungsgemäße Vorrichtung zur berührungslosen Distanzmessung vereint die Vorteile von indirekter und direkter Längenmessung. So können insbesondere auch Distanzen, die mit einem Lineal bzw. herkömmlichen Meterstab - wenn überhaupt - nur umständlich gemessen und/oder abgetragen werden können, nunmehr problemlos ermittelt und gekennzeichnet werden. So können beispielsweise auch Strecken von mehreren Metern durch die kompakte Bauform der erfindungsgemäßen Vorrichtung in "Ein-Mann-Bedienung" ermittelt werden. Das Übertragen eines Maßes von der Messvorrichtung beispielsweise auf einen Untergrund wird erleichtert bzw. deutlich beschleunigt, da die Vorrichtung in Abstandsrichtung nicht exakt punktgenau positioniert werden muss.

Weitere Vorteile der erfindungsgemäßen Vorrichtung bzw. eines erfindungsgemäßen Verfahrens zum Betrieb einer derartigen Vorrichtung ergeben sich aus der nachfolgenden Beschreibung eines Ausführungsbeispiels.

### Zeichnung

In der Zeichnung sind Ausführungsbeispiele einer erfindungsgemäßen Vorrichtung dargestellt, welche in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten und zu weiteren sinnvollen Kombinationen zusammenfassen. Insbesondere lassen sich Merkmale aus unterschiedlichen Ausführungsbeispielen zu weiteren sinnvollen Kombinationen zusammenfassen.

Es zeigen:
- Figur 1: eine erfindungsgemäße Vorrichtung zur berührungslosen Distanzmessung in einer schematischen Übersichtsdarstellung,
- Figur 2: ein Ausführungsbeispiel einer erfindungsgemäßen Vorrichtung,
- Figur 3: ein alternatives Ausführungsbeispiel einer erfindungsgemäßen Vorrichtung in einer perspektivischen Gesamtansicht,
- Figur 4: eine Detaildarstellung einer Ausgabeeinheit der erfindungsgemäßen Vorrichtung gemäß einer Ausführungsform nach Figur 2 oder Figur 3,
- Figur 5: eine schematische Darstellung einer alternativen Ausgabeeinheit für eine erfindungsgemäße Vorrichtung,
- Figur 6: die Verwendung der erfindungsgemäßen Vorrichtung zur Vermessung sehr kurzer Abstände.

### Beschreibung der Ausführungsbeispiele

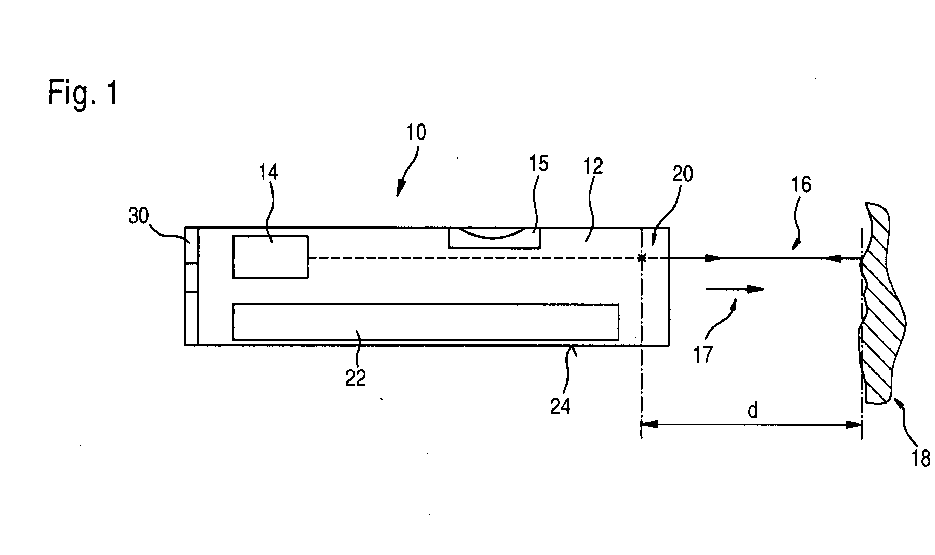

Figur 1 zeigt in einer schematischen Übersichtsdarstellung eine erfindungsgemäße Vorrichtung zur Distanzmessung. Die Vorrichtung 10 weist ein Gehäuse 12 auf, in dessen Innerem elektronische Komponenten zur Signalerzeugung, Signaldetektion sowie Signalauswertung angeordnet sind. Diese elektronischen Komponenten sind in der schematischen Darstellung der Figur 1 in symbolischer Weise zusammenfassend mit dem Bezugszeichen 14 versehen. Neben diesen elektronischen Elementen weist das Gehäuseinnere je nach Ausführungsform gegebenenfalls auch optische Elemente, wie beispielsweise Kollimationslinsen oder Objektive auf. Darüber hinaus können auch mechanische Elemente, wie beispielsweise mechanische Verschlüsse im Inneren des Gehäuses 12 angeordnet sein. Daneben weist die Vorrichtung alle bekannten Bestandteile eines Entfernungsmessers, insbesondere eines elektro-optischen Entfernungsmessers auf. Zur gezielten Ausrichtung der Vorrichtung weist diese einen Neigungssensor 15 auf, der in Figur 1 symbolisch als mechanische Libelle dargestellt ist. Dabei kann es sich aber auch um einen elektronischen Neigungssensor oder dergleichen handeln.

Die erfindungsgemäße Vorrichtung sendet ein Messsignal 16 in Messsignalrichtung 17 aus, welches an einem Zielobjekt 18 reflektiert oder gestreut wird, so dass ein Teil des ausgesendeten, rücklaufenden Messsignals 16 wiederum in das Gehäuse 12 der Vorrichtung 10 gelangt und über ein nicht näher dargestellten Detektor der elektronischen Komponente 14 sensiert werden kann. Über eine Laufzeitmessung des Messsignals 16 bzw. eine Phasenmessung, die beispielsweise die relative Phasenverschiebung zwischen dem zum Zielobjekt 18 hin laufenden Messsignal 16 und dem am Zielobjekt reflektierten und zum Messgerät zurückkehrenden Messsignal auswertet, kann der Abstand d zwischen dem Zielobjekt 18 und der Messvorrichtung 10, insbesondere der Abstand zwischen dem Zielobjekt 18 und einem Referenzpunkt, bzw. einer Referenzebene 20 der Vorrichtung in bekannter Weise detektiert werden.

Ein derartiges Messgerät lässt sich beispielsweise als ein Laserentfernungsmessgerät, ein Ultraschallmessgerät oder aber auch als ein Radarentfernungsmessgerät realisieren, in dem entsprechende Sender und Empfänger sowie die zugehörige Signalansteuerung und Auswertung in das Gehäuse 12 des Messgeräts 10 integriert werden. Zur näheren Erläuterung der Funktionsweise einer derartigen Vorrichtung zur Distanzmessung sei im Rahmen der Beschreibung der erfindungsgemäßen Vorrichtung auf die DE 102 32 878 A1 bzw. auf die DE 198 11 550 A1 verwiesen, die eine prinzipiell mögliche Funktionsweise eines solchen Entfernungsmessers in Form eines Laserentfernungsmessers beschreiben. Hinsichtlich der Signalerzeugung sowie Signalauswertung sei daher an dieser Stelle lediglich auf diese Schriften verwiesen.

Die erfindungsgemäße Vorrichtung zur Distanzmessung verfügt darüber hinaus über eine Ausgabeeinheit 22, insbesondere eine optische Ausgabeeinheit 28, mit der die Ergebnisse einer entsprechenden Distanzmessung dargestellt werden können. Über die Ausgabeeinheit 22 ist es auch möglich, Messwert, die mittels des Neigungssensors 15 ermittelt wurde, darzustellen.

Das Gehäuse 12 der Vorrichtung 10 weist eine Anlagekante 24 auf, die im Wesentlichen, das heißt, wie im Rahmen der Fertigungstoleranzen ermöglicht, parallel zur Ausgabeeinheit 22 verläuft.

Die Ausgabeeinheit selbst, die als optische Ausgabeeinheit ausgebildet ist, kann als elektro-optisches Display ausgestaltet sein und besitzt eine Ausdehnung in Messsignalrichtung 17, die deutlich größer ist als seine dazu orthogonale Ausdehnung. In bevorzugten Ausführungsformen ist die Ausdehnung der Ausgabeeinheit 22 in Messsignalrichtung 17 um ein Mehrfaches größer, als die Ausdehnung in dazu senkrechter Richtung. So kann die Ausdehnung in Messsignalrichtung beispielsweise bei 10 bis 30 cm liegen, die Ausdehnung in dazu orthogonaler Richtung jedoch beispielsweise bei nur 2 bis 5 cm.

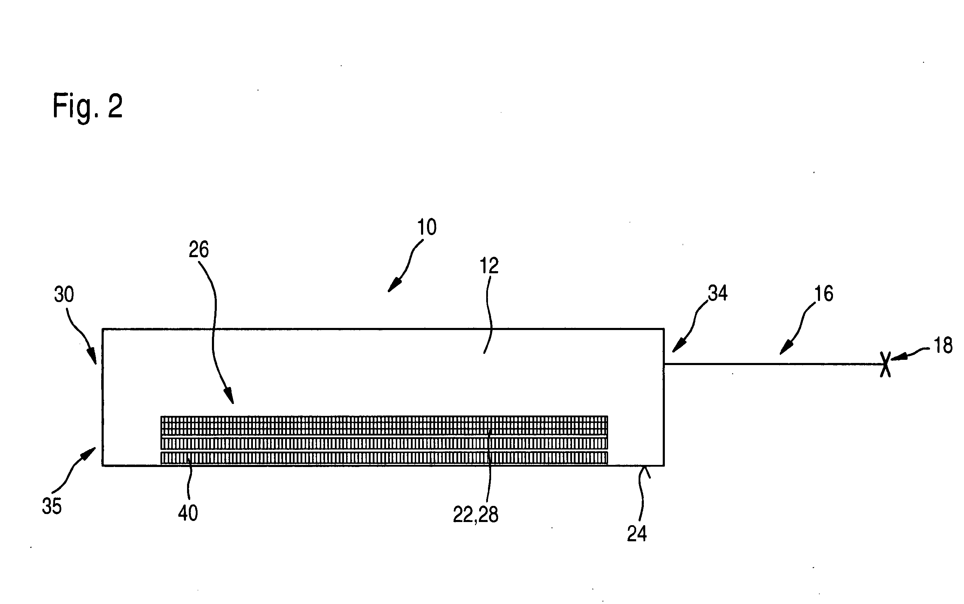

Figur 2 zeigt ein Ausführungsbeispiel einer erfindungsgemäßen Vorrichtung. Das im Wesentlichen rechteckige Gehäuse 12, welches beispielsweise aus einem Kunststoff oder auch aus einem Leichtmetall, wie insbesondere Aluminium hergestellt ist, weist eine Gehäuseöffnung 26 auf, durch die das optische Display 28 der Ausgabeeinheit 22 sichtbar ist. Das Display 28 ist im Wesentlichen sowohl parallel zur Richtung des Messsignals 16 ausgerichtet als auch parallel zur Anlagekante 24 des Gehäuses 12 der Vorrichtung. Das als Ausgabeeinheit 22 dienende Display 28 erstreckt sich über einen wesentlichen Teil der Längenausdehnung des Messgeräts in Richtung des Messsignals 16. Das Display 28 ist nahe an der Anlagekante 24 des Gehäuses 12 des Messgeräts 10 angeordnet.

Nach Einschalten des Geräts über Bedienelemente 30, die in Figur 2 nicht explizit sichtbar sind, wird im Display 28 der Ausgabeeinheit 22 beispielsweise direkt eine Lineal-Skala 36 mit diskreten Skalenteilen über die gesamte Längenausdehnung der Ausgabeeinheit 22 dargestellt. Referenzpunkt für diese Längenmessskala ist dann sinnvoller Weise das austrittsfensterferne Ende 35 des Gehäuses 12, dass in Figur 2 bei Aufsicht auf die Ausgabeeinheit das linke Ende des Gehäuses ist. In diesem Funktionsmodus entspricht die erfindungsgemäße Vorrichtung 10 einem klassischen Lineal, bzw. Meterstab jedoch mit einer beispielsweise digitalen, elektro-optischen Wiedergabe der Skalenwerte. In einem derartigen Modus lässt sich die erfindungsgemäße Vorrichtung wie ein normaler Meterstab zur direkten Messung nutzen. Vorteilhaft ist dabei insbesondere auch eine Umschaltung zwischen unterschiedlichen Maßsystemen, wie beispielsweise dem in Europa gebräuchlichen, metrischen System und dem US-Inch-System.

Wird zusätzlich das Messsignal 16, insbesondere ein optisches Messsignal, durch ein entsprechendes Bedienelement 30 aktiviert, so wird nun nicht mehr der Anstand zur Gehäusekante 34 angezeigt, sondern vielmehr der Abstand des Messgerätes 10 zu einem angepeilten Zielobjekt 18. Dazu wird der Abstand d des Zielobjektes 18 zu einer Referenzebene bzw. einem Referenzpunkt 20 der erfindungsgemäßen Vorrichtung - beispielsweise nach dem bekannten Phasenmessverfahren - bestimmt und ausgehend vom Abstand zu diesem Referenzpunkt 20 der Vorrichtung wird dann auf rechnerische Weise eine entsprechende Längenmessskala 36 in der Ausgabeeinheit 22 generiert, so dass diese die Abstände der Skalenteile dieser Messskala zu dem Zielobjekt wiedergibt. Somit lassen sich in dieser Betriebsweise der erfindungsgemäßen Vorrichtung Entfernungen des Messgeräts zu einem Zielobjekt über den gesamten Bereich, der mittels des Displays 28 dargestellten Längenmessskala wiedergeben. Wird beispielsweise der Abstand zwischen einem Zielobjekt 18 und dem Referenzpunkt bzw. der Referenzebene 20 des Messgeräts verändert, so wird automatisch die Längenmessskala des Messgeräts elektronisch nachgeführt, sodass diese jeweils exakt und aktuell den Abstand einzelner Skalenteile zu dem Messobjekt 18 wiedergibt und damit zumindest ein Teilabschnitt der Strecke zwischen einem zu vermessenden Objekt 18 und dem Objekt abgewandten Ende 35 des Gehäuses 12 mittels der Längenmessskala 36 über die Ausgabeeinheit 22 der Vorrichtung dargestellt wird.

Die erfindungsgemäße Vorrichtung entspricht somit einem Meterstab, insbesondere einem digitalen Meterstab, dessen Nullpunkt der Messskala außerhalb der mit der Ausgabeeinheit 22 dargestellten Messskala liegt. Bei aktiviertem Messsignal 16 kann der Nullpunkt dieser Messskala insbesondere auch deutlich außerhalb des Gehäuses der Vorrichtung liegen.

In alternativen Ausführungsformen kann mit Einschalten des Messgerätes auch bereits direkt das Messsignal 16 aktiviert sein, so dass sich das Messgerät sofort in dem zweiten, oben beschriebenen berührungslosen Messmodus befindet.

Hierbei kann das Gerät beispielsweise in einem Dauermessmodus arbeiten, bei dem ununterbrochen oder mit einer speziellen Taktrate jeweils der aktuelle Abstand der Vorrichtung zu dem jeweiligen Zielobjekt oder Bezugspunkt gemessen und mittels der Anzeige wiedergeben wird.

Ein weiterer Messmodus der erfindungsgemäßen Vorrichtung kann alternativer Weise jeweils nur eine Einzelmessung vorsehen, die beispielsweise durch Betätigung eines Bedienelementes ausgelöst wird. Entsprechend der gemessenen Entfernung zum Zielobjekt erfolgt dann die Darstellung der Skala auf der Ausgabeeinheit, beispielsweise in einem Einzelbild.

So ist es beispielsweise mit der erfindungsgemäßen Vorrichtung auch möglich, über eine Einzelmessung einen einzelnen Messwert aufzunehmen und über eine "Memory-Funktion" im Gerät abzuspeichern. Dieser abgespeicherte oder "abgegriffene" Wert lässt sich mit der erfindungsgemäßen Vorrichtung nun einfach auf einen anderen Untergrund übertragen. Im "Memory-Mode" zeigt die Ausgabeeinheit hierzu beispielsweise über Pfeile an, in welche Richtung die Vorrichtung verschoben werden muss, damit die aktuelle Strecke, die gerade vermessen wird, der zuvor aufgenommene Distanz entspricht. Liegt der Endpunkt der abzutragenden Strecke im Bereich der Messskala, so wird dieser Endpunkt an der entsprechenden Stelle der Ausgabeeinheit angezeigt, so dass ein Anwender das zuvor bestimmte Maß abtragen kann. Auf diese Weise ist es möglich, ein einmal aufgenommenes bzw. "abgegriffenes" Maß auf eine Vielzahl von Untergründen zu übertragen. So können in einfacher Weise beispielsweise eine Mehrzahl von Brettern mit einem Maß gleicher Länge versehen und anschließend zugeschnitten werden. Alternativerweise ist es auch möglich, den zu übertragenen Messwert nicht erst auszumessen bzw. durch eine Messung "abzugreifen", sondern über ein Bedienfeld, beispielsweise über ein Tastenfeld mit Ziffern, direkt in das Messgerät einzugeben und abzuspeichern. Die Ausgabeeinheit der Vorrichtung zeigt dann im "Memory-Mode" wiederum beispielsweise über Pfeile nach links oder rechts an, in welche Richtung die Vorrichtung verschoben werden muss, damit die gerade auszumessende Strecke, den zuvor abgespeicherten Distanzwert erreicht.

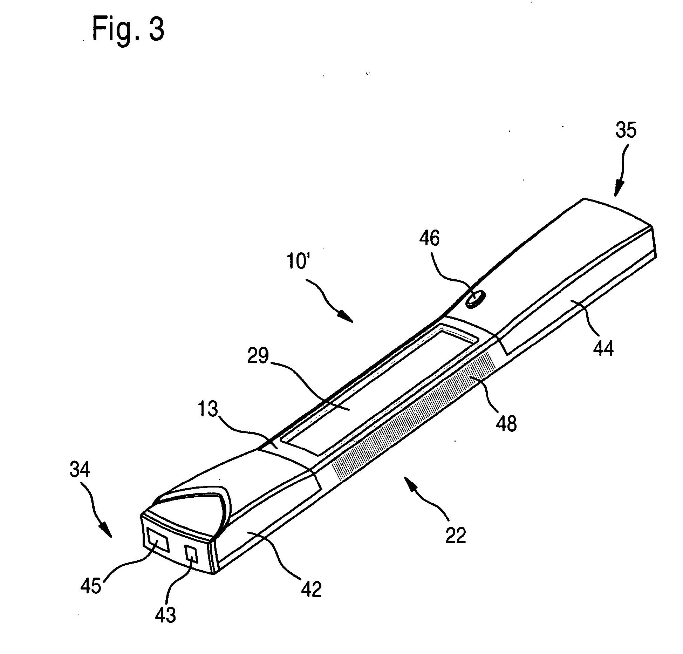

Figur 3 zeigt eine alternative Ausführungsform 10' für ein erfindungsgemäßes Messgerät. Die Vorrichtung weist ein Gehäuse 13 mit einen Messkopf 42 auf, in dem beispielsweise eine Laserentfernungsmesser oder auch ein Ultraschallentfernungsmesser angeordnet ist. Das Messsignal tritt durch ein entsprechendes Austrittsfenster 43 an dem Objekt zugewandten Ende 34 der Vorrichtung aus dem Gehäuse 13 aus, wird an einem - in Figur 3 nicht weiter dargestellten - Zielobjekt reflektiert und gelangt zum Teil durch ein Eintrittsfenster 45 wiederum in das Gehäuse zurück. An dem, dem Messkopf 42 entgegen gesetzten, dem Objekt somit abgewandten Ende 35 der Vorrichtung ist eine Auswerte- und Recheneinheit 44 der Vorrichtung angeordnet, die beispielsweise über eine Laufzeitmessung oder aber auch über eine Phasenauswertung, den Abstand der Vorrichtung zu dem Zielobjekt bestimmt. Im Bereich der Auswerteeinheit 44 können beispielsweise auch entsprechende Bedienelemente und Eingabetasten angebracht sein, die in der Darstellung der Figur 3 nur symbolisch als ein Bedienelement 46 angedeutet sind. Zwischen dem Messkopf 42 und der Recheneinheit 44 ist die Ausgabeeinheit 22 in Form eines elektro-optischen Display 29 angeordnet. Beidseitig der Längsseite des elektro-optischen Displays 29 besitzt die Vorrichtung eine fixe Skala 48, die am Gehäuse 13 der Vorrichtung angebracht ist. Diese Skalen dienen der Übertragung von Messwerten auf einen Untergrund. In alternativen Ausführungsformen der erfindungsgemäßen Vorrichtung können der Messkopf und die Auswerte- und Recheneinheit auch in einem Gehäuse integriert und insbesondere lediglich an einer Seite des Displays angeordnet sein.

Die Funktionsweise der Vorrichtung und insbesondere die Funktionsweise der Ausgabeeinheit entspricht der zuvor beschriebenen und soll nachfolgend für die Ausführungsbeispiele der Figuren 2 und 3 noch etwas näher erläutert werden.

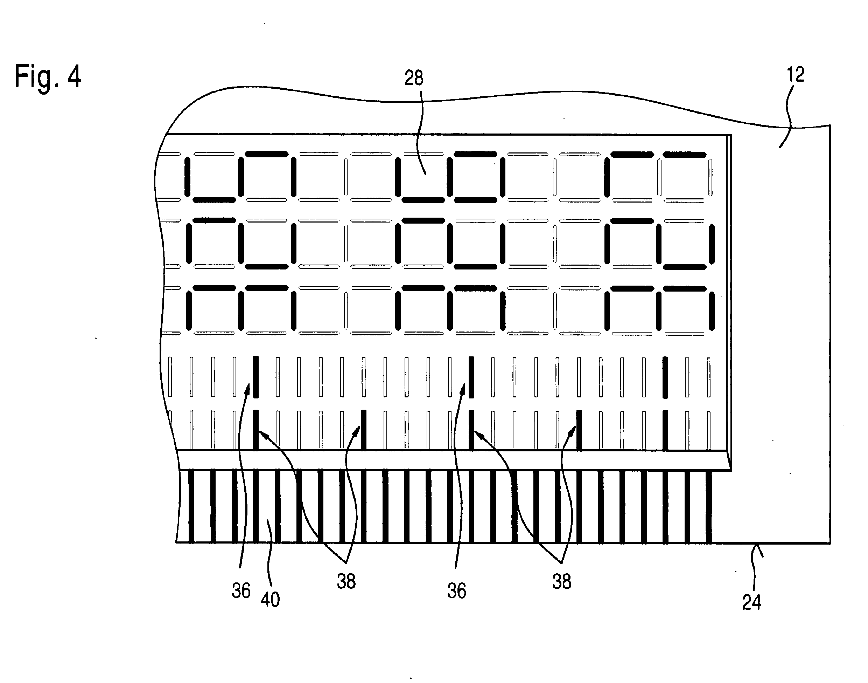

Figur 4 zeigt eine Detaildarstellung des Gehäuses 12 bzw. 13 der erfindungsgemäßen Vorrichtung 10 bzw. 10' gemäß Figur 2 bzw. Figur 3 im Bereich des optischen Displays 28 bzw. 29. Das Display weist ein digitale Anzeige mit einer variablen Skala auf, die aus Skalenstrichen und zugeordneten Zahlenwerten besteht. Die Zahlenwerte verändern sich mit zu- oder abnehmender Distanz zwischen der Messvorrichtung und einem Zielobjekt entsprechend. Auch der Einsatz von beispielsweise LEDs oder Laseranzeigen ist prinzipiell möglich. Auf dem dargestellten beispielhaften Display 28 bzw. 29 sind Skalenteile 36 mit einem Abstand von 1 cm eingeblendet. Diese Skalierung besitzt noch jeweils eine Unterteilung in 5 mm-Schritte durch zusätzliche Skalenteile 38. Eine noch weitere Unterteilung der Skalierung, beispielsweise in 1 mm-Strichen ist ebenso möglich und kann beispielsweise auf Anforderung eines Anwenders eingeblendet werden. Unter Umständen vorteilhaft ist eine Ausführungsform der erfindungsgemäßen Vorrichtung die unterschiedlich feine Skalierungen in Abhängigkeit von der gemessenen absoluten Entfernung zu einem Zielobjekt zulässt. So kann beispielsweise die Messunsicherheit der erfindungsgemäßen Vorrichtung der absoluten Entfernung der Vorrichtung zum Messobjekt angepasst werden, wie dies anmelderseitig mit der DE 102 32 878 A1 für Entfernungsmessgeräte vorgeschlagen wurde. Entsprechend der verwendeten Messunsicherheit kann somit auf eine unterschiedlich feine Darstellung der Messskala zurückgegriffen werden.

Den Skalenteilen 36 zugeordnet sind Zahlenwerte, die den jeweiligen Abstand eines jeden Skalenteils 36 zu einem Zielobjekt 18 angeben. Die erfindungsgemäße Vorrichtung gibt somit nicht nur den Abstand zwischen einem Zielobjekt und einer Referenzebene, bzw. einem Referenzpunkt der Messvorrichtung an, sondern zeigt darüber hinaus in einem endlich weiten Bereich die Absolutabstände einer Messskala zu dem Zielobjekt. Über den gesamten Bereich der Ausgabeeinheit kann der absolute Abstand von Messpunkten zu einem Zielobjekt und somit auch der relative Abstand dieser Messpunkte zueinander abgelesen und beispielsweise auf einem Untergrund markiert werden. Dazu weist das Gehäuse 12 der erfindungsgemäßen Vorrichtung 10 zudem eine gehäusefeste, das heißt fixe Skalierung 40 auf, die beispielsweise über den gesamten Längenausdehnungsbereich der Ausgabeeinheit 22 oder aber auch über den gesamten Längenausdehnungsbereich des Gehäuses 12 gehäusefest angeordnet ist. Im Ausführungsbeispiel der Figur 2 bzw. Figur 3 findet eine solche fixe Skalierung in 1 mm-Schritten Anwendung. Andere Skalierungen sind natürlich ebenfalls denkbar.

Neben der in Figur 4 dargestellten Ausführung der elektronischen Längenmessskala kann je nach Anwendung auch ein Teilmessbereich aus dem Gesamtmessbereich oder aber auch lediglich nur ein einzelner Messwert wiedergegeben werden, so dass ähnlich wie bei herkömmlichen Laserentfernungsmessern auch Einzelmessungen, beispielsweise in Bezug auf einen Referenzpunkt oder eine Bezugskante des Gerätes (z.B. vorderes oder hinteres Ende des Messgerätes) möglich sind. Insbesondere ist vorgesehen, dass der Geäteseitige Referenzpunkt der Entfernungsmessung umschaltbar ist.

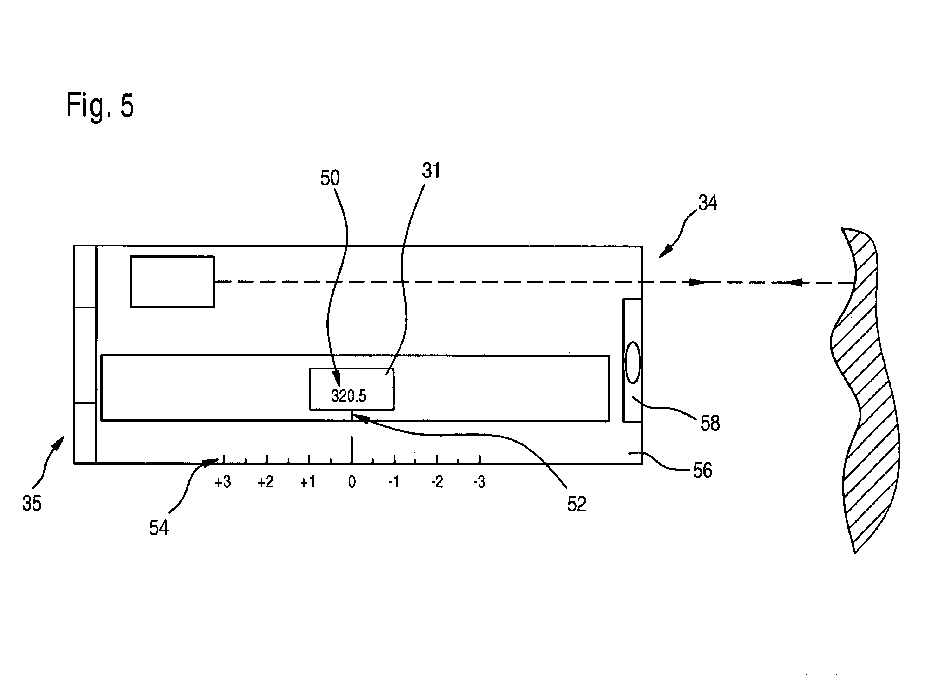

Figur 5 zeigt in stark vereinfachter Weise ein Ausführungsbeispiel für eine derartige Ausgabeeinheit. Ein gemessener Einzelmesswert 50 (hier: 320,5cm) wird in vorteilhafter Weise mit zumindest einem Skalenstrich 52 versehen, der über seinen Bezug zur fixen Messskala 54 am Gerätegehäuse 56 das Abtragen des Messwertes selbst, bzw. auch das Abtragen von relativen Längen, ausgehend von dem berührungslos gemessenen Messwert 50 ermöglicht. Dazu ist die fixe Messskala 54 des Gehäuses 56 in vorteilhafter Weise als relative Skala ausgebildet und der berührungslos ermittelte Messwert 50 wird an einer festen Stelle in der Ausgabeeinheit 31 eingeblendet. Zur Ausrichtung der Vorrichtung ist eine mechanische Libelle 58 am Objekt zugewandten Ende 34 der Vorrichtung in das Gehäuse 56 integriert. Alternativerweise kann in die Vorrichtung nach Figur 5 bzw. auch in die anderen, bereits beschriebenen Vorrichtungen beispielsweise auch ein elektronischer Neigungssensor integriert sein. Auch kann die Position und Anordnung der Libellen oder des Neigungsmessers je nach Ausführungsform variieren.

Über entsprechende Bedienelemente lassen sich die unterschiedlichen Mess-Modi von einem Anwender aufgabenbezogen auswählen. Die Mess-Modi können beispielsweise über ein Tastenfeld oder aber auch über ein Drehrad am Gehäuse eingestellt werden.

So kann beispielsweise in einem speziellen Messmodus einer jeden der beschriebenen Ausführungsformen der erfindungsgemäßen Vorrichtung mit einer so genannten "Memory-Taste" ein ermittelter Messwert gespeichert oder über eine Tastenfolge ein gewünschter Abstandswert direkt in das Messgerät eingegeben werden. Beim Abtragen dieses gespeicherten Wertes, beispielsweise auf einen anderen Untergrund, kann der Zahlenwert im Display gesondert hervorgehoben werden. Dies kann beispielsweise in einer Darstellung der Ausgabeeinheit nach Figur 5 geschehen. Beim Abtragen des gewünschten Werts wird beispielsweise ein Pfeil bzw. eine Linie eingeblendet, welcher/welche die Lage des abzutragenden Messwerts im Bezug auf die relative Lage der Ausgabeeinheit zum Zielobjekt anzeigt. Dem Anwender der erfindungsgemäßen Vorrichtung wird somit signalisiert, in welche Richtung er die Vorrichtung verschieben muss, so dass diese den gewünschten Abstand von einem bestimmten Zielobjekt bekommt. Erscheint der abzutragender Messwert im Anzeigenbereich der Vorrichtung, das heißt, liegt der Endpunkt der entsprechend abzutragenden Strecke im Bereich der dargestellten Längenmessskala der Ausgabeeinheit, so wird der entsprechende Pfeil bzw. die Linie ausgeblendet und der Messwert an der Stelle, die seinem Abstand von dem Bezugspunkt entspricht eingeblendet. Auf diese Weise wird einem Anwender leicht übermittelt, in welche Richtung er die erfindungsgemäße Vorrichtung relativ zum Zielobjekt zu bewegen hat, um in den Bereich des gewünschten Abstandes zu gelangen.

Insbesondere vorteilhaft ist es, die erfindungsgemäße Vorrichtung darüber hinaus mit einer mechanischen oder elektronischen Libelle zu versehen, die es ermöglicht, die erfindungsgemäße Vorrichtung auch als Neigungsmesser zu verwenden, bzw. sicher zu stellen, dass bei einer entsprechenden Entfernungsmessung mit dem Gerät die Vorrichtung "im Wasser" ist.
Darüber hinaus kann durch die Integration eines Lagesensors in das Gehäuse der erfindungsgemäßen Vorrichtung die Ausgabeeinheit derart gestaltet werden, dass die angezeigten Abstandswerte immer in optimal ablesbarer Position angezeigt werden. So kann je nach Ausrichtung des Gehäuses der Zahlenwert, der einem Skalenteil zugeordnet ist, um 90° bzw. 180° zu der in Figur 3 dargestellten Orientierung gedreht werden, um einem Anwender die bessere Lesbarkeit der Skalierung zu gewährleisten. Die digitale Skala der Ausgabeeinheit ermöglicht somit eine gute Orientierung des Anwenders sowohl über den gesamten Messbereich als auch insbesondere über den Anzeigenbereich der Vorrichtung.

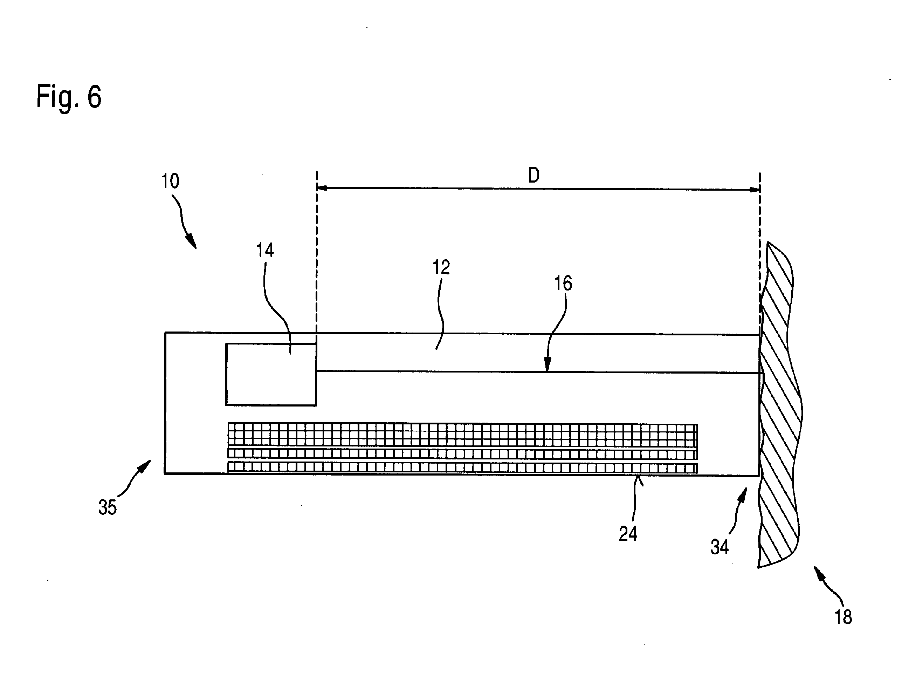

Die erfindungsgemäße Vorrichtung erlaubt zudem in vorteilhafter Weise im Gegensatz zu herkömmlichen elektro-optischen Entfernungsmessern auch das Messen bzw. Abtragen von Werten, beginnend mit einem Abstand von 0 mm von der Vorrichtung aus. Figur 6 zeigt eine entsprechende Messsituation.

Durch eine entsprechende Anordnung der Messtechnik, das heißt insbesondere des Senders sowie des Empfängers für das Messsignal, in dem Gehäuse der Vorrichtung, kann der bei Distanzmessgeräten, wie beispielsweise Laserentfernungsmessern übliche "Todbereich" im Nahbereich der Objektabstände, welcher bei einigen Zentimetern liegt, vermieden werden. Dies ist bei der erfindungsgemäßen Vorrichtung insbesondere dadurch möglich, dass die entsprechende Messtechnik 14 in dem länglichen "Linealgehäuse" 12 der Vorrichtung um mindestens eine, den Betrag des Todbereichs entsprechenden Strecke D zurückgesetzt wird. Somit sind mit der erfindungsgemäßen Vorrichtung auch Messungen relativ zu Zielobjekten möglich, die einen Abstand von Null bzw. nur einigen wenigen Zentimetern zum objektseitigen Ende des Gehäuses der Vorrichtung haben. Eine derartige Anordnung der Vorrichtung zum Zielobjekt, welche gegebenenfalls einen Berührungskontakt zwischen der Vorrichtung und einem Zielobjekt bedingt, ist jedoch im Rahmen der erfindungsgemäßen Offenbarung ebenfalls als berührungslose Distanzmessung anzusehen, da die Ermittlung der gesuchten Distanz zwischen dem Messgerät und dem Zielobjekt berührungslos mit Hilfe des Messsignals 16 erfolgt.

Die erfindungsgemäße Vorrichtung ist nicht auf die Ausführungsformen der Ausfiihrungsbeispiele beschränkt.

Insbesondere ist die erfindungsgemäße Vorrichtung nicht auf die Verwendung von Lichtsignalen, insbesondere Lasersignalen als Messsignal beschränkt. So können beispielsweise auch entsprechende Radarsignale oder allgemein elektromagnetische Strahlung als Messsignal verwendet werden, um einen Abstand zwischen einem Zielobjekt und der Vorrichtung bzw. einem Referenzpunkt der Vorrichtung zu bestimmen.

Alternativer Weise lassen sich aber auch akustische Messsignale, insbesondere Ultraschallsignale für diese Entfernungsmessungen nutzen.

Neben der Verwendung von modulierten Messsignalen, welche eine Entfernungsbestimmung über die Signallaufzeit bzw. die Phasenverschiebung des hin- bzw. rücklaufenden Messsignals ermöglicht, können prinzipiell auch Triangulationsmethoden zur Bestimmung der Entfernung zwischen dem Zielobjekt und der Messvorrichtung genutzt werden.

Auch die Ausgabeeinheit ist nicht auf die Verwendung eines elektro-optischen Displays beschränkt. So könnte die Darstellung der Messskala beispielsweise auch rein mechanisch durch die Anzeige eines umlaufenden Bandes auf welchem die Entfemungsmesswerte aufgeführt sind, erfolgen.

Die erfindungsgemäße Vorrichtung stellt somit einen Meterstab, insbesondere einen digitalen Meterstab, dar, der die Vorteile von direkter und indirekter Längenmessung vereint. Insbesondere die vorteilhafte Gehäuseform, die eine erhöhte Längsausdehnung des Gehäuses in Richtung des Messsignals aufweist, welche deutlich größer ist als die Ausdehnung des Gehäuses in den beiden dazu orthogonalen Richtungen, ermöglicht messbegleitende Tätigkeiten, wie beispielsweise das Abtragen und Markieren von Punkten, Punktabständen oder Linien. Das entsprechend ausgestaltete längliche Display mit seiner digitalen Anzeige ermöglicht die Darstellung einer variablen Skala aus Skalenstrichen und Zahlenwerten, welche insbesondere mit zu- oder abnehmender Messentfernung veränderlich sind und sich an die entsprechenden Entfernungswerte anpassen. Insbesondere lassen sich Strecken, die mit einem Lineal oder gewöhnlichen, endlichen Meterstab nur umständlich gemessen oder abgetragen werden können, problemlos auch von einem einzelnen Anwender ermitteln und kennzeichnen. Beim Übertragen von Linien entspricht die Funktionalität der erfindungsgemäßen Vorrichtung somit vorteilhaft der eines gewöhnlichen Lineals.

## Patentansprüche

1. Vorrichtung (10,10') zur berührungslosen Distanzmessung, insbesondere eine handgehaltene Vorrichtung, welche mittels eines ausgesandter Messsignals (16), und des von einem Zielobjeket (18) reflektierten Messsignals (16) insbesondere mittels eines modulierten Messsignals, die Bestimmung eines Abstandes (d) zwischen dem Zielobjekt (18) und zumindest einem Referenzpunkt (20) der Vorrichtung (10) ermöglicht, zumindest aufweisend ein Gehäuse (12,13,56) mit einem dem zu vermessenden Objekt (18) zugewandten ersten Ende (34) und einem, von dem zu vermessenden Objekt (18) abgewandten, zweiten Ende (35), sowie mit einer Ausgabeeinheit (22,28,29,31) zur Wiedergabe von Messergebnissen, **dadurch gekennzeichnet, dass** zumindest einem Teilabschnitt der Strecke zwischen dem zu vermessenden Objekt (18) und dem abgewandten Ende (35) des Gehäuses (12,13,56) über eine mittels der Ausgabeeinheit (22,28,29,31) darstellbare Längenmessskala (36,38,54) mehrere Abstandsmesswerte zuzuordnen sind.

2. Vorrichtung nach Anspruch 1, **dadurch gekennzeichnet, dass** mittels der Ausgabeeinheit (22,28) eine variable Messskala (36,38) anzeigbar ist, welche sich mit zuund/oder abnehmender Messentfernung (d) entsprechend der gemessenen Entfernung zwischen dem Zielobjekt (18) und einem Referenzpunkt (20) der Vorrichtung ändert.

3. Vorrichtung nach Anspruch 1 oder 2, **dadurch gekennzeichnet, dass** das Gehäuse (12,13,56) der Vorrichtung eine zur Messsignalrichtung (17) im wesentlichen parallele Anlagekante (24) besitzt.

4. Vorrichtung nach Anspruch 3, **dadurch gekennzeichnet, dass** die Ausgabeeinheit (22,28) zur Darstellung der Messskala (36,38) im wesentlichen parallel zu einer Anlagekante (24) des Gehäuses (12) angeordnet ist.

5. Vorrichtung nach Anspruch 1 oder 2, **dadurch gekennzeichnet, dass** die Messskala (36,38) aus Skalenteilen und/oder Zahlenwerten besteht.

6. Vorrichtung nach zumindest einem der Ansprüche 1, 2 oder 5, **dadurch gekennzeichnet, dass** die Messskala (22,28,31) über Zahlenwerte verfügt, deren Betrag den jeweiligen Abstand eines zugehörigen Skalenteils zum Messobjekt (18) wiedergibt.

7. Vorrichtung nach einem der vorhergehenden Ansprüche, **dadurch gekennzeichnet, dass** die Orientierung der Messskala (22,28,31) relativ zum Gehäuse (12,13,56) umschaltbar ist.

8. Vorrichtung nach einem der vorhergehenden Ansprüche, **dadurch gekennzeichnet**, das die Vorrichtung (10,10') mit zumindest einem Neigungssensor, insbesondere mit zumindest einer mechanischen oder elektronischen Libelle (15,58) versehen ist, der es ermöglicht, die Vorrichtung (10,10') als Neigungsmesser zu verwenden

9. Vorrichtung nach einem der vorhergehenden Ansprüche, **dadurch gekennzeichnet, dass** das Gehäuse (12,13,56) über zumindest eine zusätzliche Skala (26,54), insbesondere eine fixe Strichskala verfügt, welche insbesondere im Bereich einer Anlagekante (24) des Gehäuses (12,13) ausgebildet ist.

10. Vorrichtung nach einem der vorhergehenden Ansprüche, **dadurch gekennzeichnet, dass** die Ausgabeeinheit (22) ein elektro-optisches Display (28,29,31) ist, das die Darstellung der Längenmessskala (22,28,31) in digitaler Form ermöglicht.

11. Vorrichtung nach einem der vorhergehenden Ansprüche, **dadurch gekennzeichnet, dass** die Ausmaße der Ausgabeeinheit (22) in Richtung (17) des Messsignals (16) um ein Mehrfaches größer sind, als in dazu orthogonaler Richtung.

12. Vorrichtung nach einem der vorhergehenden Ansprüche, **dadurch gekennzeichnet, dass** das Messsignal (16) ein elektromagnetisches Messsignal, insbesondere ein moduliertes elektromagnetisches Messsignal, ist.

13. Vorrichtung nach Anspruch 12, **dadurch gekennzeichnet, dass** das Messsignal (16) ein optisches Messsignal (16), insbesondere ein Lasersignal, ist.

14. Vorrichtung nach einem der vorhergehenden Ansprüche 1 bis 11, **dadurch gekennzeichnet, dass** das Messsignal (16) ein akustisches Signal, insbesondere ein Ultraschallsignal ist.

15. Vorrichtung nach einem der vorhergehenden Ansprüche, **dadurch gekennzeichnet, dass** die Empfangs- und/oder Sendeeinheit (14) der Vorrichtung um eine derartige Strecke D von dem ersten Ende (34) des Gehäuses (12,13,56) zurückgesetzt ist, dass auch ein Vermessen von Objekten, die am ersten Ende (34) der Vorrichtung anliegen, ermöglicht ist.

16. Verfahren zum Betrieb eines digitalen Meterstabes (10,10'), wobei der Meterstab (10,10') endlicher Länge eine optische Ausgabeeinheit (22,28,29) zur Wiedergabe einer Längenmessskala (36,38) aufweist, **dadurch gekennzeichnet, dass** der Nullpunkt der Längenmessskala (36,38) außerhalb des von der Ausgabeeinheit (22,28) dargestellten Messbereichs liegt und über eine berührungslose Abstandsmessung mittels eines augesandten Messsignals (16) und des von einem Zielobjekt (18) reflektierten Messsignals (16) insbesondere eine berührungslose, elektrooptische Abstandsmessung, bestimmt wird.

17. Verfahren nach Anspruch 16, **dadurch gekennzeichnet, dass** sich die Messskala (22,28) des Meterstabes mit zu- oder abnehmendem Abstand (d) des Meterstabes (10) zu einem Messobjekt (18) entsprechend dem jeweiligen Abstand verändert.

18. Verfahren nach Anspruch 16 oder 17, **dadurch gekennzeichnet, dass** die Ausgabeeinheit (22,28) eine Messskala (36,38) mit Zahlenwerten wiedergibt, wobei der Betrag eines Zahlenwertes dem jeweiligen Abstand des dem Zahlenwert zugehörigen Skalenteils (36) zum Messobjekt (18) entspricht.

## Claims

1. Apparatus (10, 10') for contactlessly measuring distance, in particular a handheld apparatus, which makes it possible to determine a distance (d) between a target object (18) and at least one reference point (20) of the apparatus (10) using an emitted measurement signal (16) and the measurement signal (16) reflected by the target object (18), in particular using a modulated measurement signal, at least having a housing (12, 13, 56) with a first end (34) facing the object (18) to be measured and a second end (35) averted from the object (18) to be measured, and with an output unit (22, 28, 29, 31) for reproducing measurement results, **characterized in that** a plurality of distance measured values can be assigned to at least one section of the route between the object (18) to be measured and the averted end (35) of the housing (12, 13, 56) using a length-measuring scale (36, 38, 54) which can be displayed using the output unit (22, 28, 29, 31).

2. Apparatus according to Claim 1, **characterized in that** the output unit (22, 28) can be used to display a variable measuring scale (36, 38) which changes with increasing and/or decreasing measurement distance (d) according to the measured distance between the target object (18) and a reference point (20) of the apparatus.

3. Apparatus according to Claim 1 or 2, **characterized in that** the housing (12, 13, 56) of the apparatus has a bearing edge (24) which is substantially parallel to the measurement signal direction (17).

4. Apparatus according to Claim 3, **characterized in that** the output unit (22, 28) for displaying the measuring scale (36, 38) is arranged substantially parallel to a bearing edge (24) of the housing (12).

5. Apparatus according to Claim 1 or 2, **characterized in that** the measuring scale (36, 38) consists of scale parts and/or numerical values.

6. Apparatus according to at least one of Claims 1, 2 and 5, **characterized in that** the measuring scale (22, 28, 31) has numerical values, the magnitude of which represents the respective distance between an associated scale part and the measurement object (18).

7. Apparatus according to one of the preceding claims, **characterized in that** the orientation of the measuring scale (22, 28, 31) relative to the housing (12, 13, 56) can be changed.

8. Apparatus according to one of the preceding claims, **characterized in that** the apparatus (10, 10') is provided with at least one inclination sensor, in particular with at least one mechanical or electronic spirit level (15, 58), which makes it possible to use the apparatus (10, 10') as an inclinometer.

9. Apparatus according to one of the preceding claims, **characterized in that** the housing (12, 13, 56) has at least one additional scale (26, 54), in particular a fixed graduated scale, which is formed, in particular, in the region of a bearing edge (24) of the housing (12, 13).

10. Apparatus according to one of the preceding claims, **characterized in that** the output unit (22) is an electro-optical display (28, 29, 31) which makes it possible to display the length-measuring scale (22, 28, 31) in digital form.

11. Apparatus according to one of the preceding claims, **characterized in that** the dimensions of the output unit (22) are a multiple greater in the direction (17) of the measurement signal (16) than in the direction orthogonal thereto.

12. Apparatus according to one of the preceding claims, **characterized in that** the measurement signal (16) is an electromagnetic measurement signal, in particular a modulated electromagnetic measurement signal.

13. Apparatus according to Claim 12, **characterized in that** the measurement signal (16) is an optical measurement signal (16), in particular a laser signal.

14. Apparatus according to one of the preceding Claims 1 to 11, **characterized in that** the measurement signal (16) is an acoustic signal, in particular an ultrasonic signal.

15. Apparatus according to one of the preceding claims, **characterized in that** the receiving and/or transmitting unit (14) of the apparatus is set back from the first end (34) of the housing (12, 13, 56) by such a distance D that it is also possible to measure objects which are at the first end (34) of the apparatus.

16. Method for operating a digital metre stick (10, 10'), the metre stick (10, 10') of a finite length having an optical output unit (22, 28, 29) for reproducing a length-measuring scale (36, 38), **characterized in that** the zero point of the length-measuring scale (36, 38) is outside the measurement range displayed by the output unit (22, 28) and is determined by means of a contactless distance measurement using an emitted measurement signal (16) and the measurement signal (16) reflected by a target object (18), in particular a contactless, electro-optical distance measurement.

17. Method according to Claim 16, **characterized in that** the measuring scale (22, 28) of the meter stick changes with increasing or decreasing distance (d) between the metre stick (10) and a measurement object (18) according to the respective distance.

18. Method according to Claim 16 or 17, **characterized in that** the output unit (22, 28) reproduces a measuring scale (36, 38) with numerical values, the magnitude of a numerical value corresponding to the respective distance between the scale part (36) associated with the numerical value and the measurement object (18).

## Revendications

1. Dispositif (10, 10') de mesure de distance sans contact, en particulier dispositif manuel qui permet de déterminer la distance (d) entre l'objet cible (18) et au moins un point de référence (20) du dispositif (10) au moyen de l'émission d'un signal de mesure (16) et en particulier au moyen de l'émission d'un signal de mesure modulé et du signal de mesure (16) réfléchi par un objet cible (18),
le dispositif présentant au moins un boîtier (12, 13, 56) doté d'une première extrémité (34) tournée vers l'objet à mesurer (18) et d'une deuxième extrémité (35) non tournée vers l'objet à mesurer (18) ainsi qu'une unité de sortie (22, 28, 29, 31) qui délivre les résultats de mesure,
**caractérisé en ce que**
plusieurs valeurs de mesure de distance peuvent être associées à au moins une partie du parcours entre l'objet (18) à mesurer et l'extrémité (35), non tournée vers l'objet, du boîtier (12, 13, 56), par l'intermédiaire d'une échelle (36, 38, 54) de mesure de longueur qui peut être présentée au moyen de l'unité de sortie (22, 28, 29, 31).

2. Dispositif selon la revendication 1, **caractérisé en ce qu'**une échelle variable de mesure (36, 38) qui varie lorsque la distance de mesure (d) augmente et/ou diminue en correspondance à la distance mesurée entre l'objet cible (18) et un point de référence (20) du dispositif peut être affichée au moyen de l'unité de sortie (22, 28).

3. Dispositif selon les revendications 1 ou 2, **caractérisé en ce que** le boîtier (12, 13, 56) du dispositif possède un bord de pose (24) essentiellement parallèle à la direction (17) du signal de mesure.

4. Dispositif selon la revendication 3, **caractérisé en ce que** l'unité de sortie (22, 28) est disposée essentiellement en parallèle à un bord de pose (24) du boîtier (12) pour présenter l'échelle de mesure (36, 38).

5. Dispositif selon les revendications 1 ou 2, **caractérisé en ce que** l'échelle de mesure (36, 38) est constituée de parties d'échelle et/ou de valeurs numériques.

6. Dispositif selon au moins l'une des revendications 1, 2 ou 5, **caractérisé en ce que** l'échelle de mesure (22, 28, 31) dispose de valeurs numériques dont le niveau représente la distance entre une partie associée de l'échelle et l'objet (18) à mesurer.

7. Dispositif selon l'une des revendications précédentes, **caractérisé en ce que** l'orientation de l'échelle de mesure (22, 28, 31) par rapport au boîtier (12, 13, 56) peut être inversée.

8. Dispositif selon l'une des revendications précédentes, **caractérisé en ce que** le dispositif (10, 10') est doté d'au moins une sonde d'inclinaison et en particulier d'au moins un niveau mécanique ou électronique (15, 58) qui permet d'utiliser le dispositif (10, 10') comme dispositif de mesure d'inclinaison.

9. Dispositif selon l'une des revendications précédentes, **caractérisé en ce que** le boîtier (12, 13, 56) dispose d'au moins une échelle supplémentaire (26, 54) et en particulier d'une échelle fixe à traits formée en particulier au niveau du bord de pose (24) du boîtier (12, 13).

10. Dispositif selon l'une des revendications précédentes, **caractérisé en ce que** l'unité de sortie (22) est un affichage électro-optique (28, 29, 31) qui permet de représenter l'échelle (22, 28, 31), de mesure de longueur sous forme numérique.

11. Dispositif selon l'une des revendications précédentes, **caractérisé en ce que** les dimensions de l'unité de sortie (22) dans la direction (17) du signal de mesure (16) est un multiple de celle dans la direction perpendiculaire.

12. Dispositif selon l'une des revendications précédentes, **caractérisé en ce que** le signal de mesure (16) est un signal électromagnétique de mesure et en particulier un signal électromagnétique modulé de mesure.

13. Dispositif selon la revendication 12, **caractérisé en ce que** le signal de mesure (16) est un signal optique de mesure (16) et en particulier un signal laser.

14. Dispositif selon l'une des revendications 1 à 11, **caractérisé en ce que** le signal de mesure (16) est un signal acoustique et en particulier un signal d'ultrasons.

15. Dispositif selon l'une des revendications précédentes, **caractérisé en ce que** l'unité de réception et/ou d'émission (14) du dispositif est reculée d'une distance D de la première extrémité (34) du boîtier (12, 13, 56) de manière à permettre de mesurer également des objets appliqués sur la première extrémité (34) du dispositif.

16. Procédé d'utilisation d'une barre numérique de mesure (10, 10') de longueur finie présentant une unité optique de sortie (22, 28, 29) qui représente une échelle (36, 38) de mesure de longueur,
**caractérisé en ce que**
le point zéro de l'échelle (36, 38) de mesure de longueur est situé à l'extérieur de la plage de mesure présentée par l'unité de sortie (22, 28) et est déterminé au moyen de l'émission d'un signal de mesure (16) et du signal de mesure (16) réfléchi par un objet cible (18), par une mesure de distance sans contact et en particulier par une mesure électro-optique de distance sans contact.

17. Dispositif selon la revendication 16, **caractérisé en ce que** l'échelle de mesure (22, 28) du barreau de mesure varie en fonction de l'augmentation et/ou de la diminution de la distance (d) du barreau de mesure (10) par rapport à un objet (18) à mesurer.

18. Procédé selon les revendications 16 ou 17, **caractérisé en ce que** l'unité de sortie (22, 28) représente une échelle de mesure (36, 38) à l'aide de valeurs numériques, le niveau d'une valeur numérique correspondant à la distance entre l'objet (18) à mesurer et la partie (36) de l'échelle qui correspond à la valeur numérique.
